# EUROPEAN PATENT APPLICATION

(11) **EP 4 701 251 A1**
(43) Date of publication of application: **25.02.2026**
(21) Application number: 23933433.7
(22) Date of filing: 19.04.2023
(51) Int. Cl.: H04W 12/033

(54) **DATA FRAME ENCRYPTION METHOD AND APPARATUS, DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2023/089351
(87) International publication number: WO 2024/216556

(57) **Abstract**

Embodiments of the present disclosure relate to the technical field of communications, and provide a data frame encryption method and apparatus, a device and a storage medium. The method can be applied to a first device and comprises: determining a first radio frame, wherein the first radio frame comprises a first identification bit, and the first identification bit is used for indicating that the first device supports the construction of new AAD; and sending the first radio frame. The embodiments of the present disclosure can be used for the first device to indicate to other devices that the first device supports the construction of the new AAD.

## Description

### TECHNICAL FIELD

The embodiments of the disclosure relate to the field of communication technologies, in particular to a method for encrypting a data frame, an apparatus for encrypting a data frame, a device and a storage medium.

### BACKGROUND

With the continuous development of wireless fidelity (Wi-Fi) technology, researchers have proposed the next generation of Wi-Fi technology: ultra high reliability (UHR), to improve reliability of wireless local area network (WLAN) connectivity, reduce latencies, increase manageability and increase throughput.

To ensure the reliability of data frame transmission, existing technologies typically construct additional authentication data (AAD) to further encrypt the data frame being transmitted, which ensures security of the data frame being transmitted. However, existing AAD construction methods only guarantee the security of a limited amount of data within the data frame being transmitted, resulting in poor data reliability.

### SUMMARY

The embodiments of the disclosure provide a method for encrypting a data frame, an apparatus for encrypting a data frame, a device and a storage medium, to indicate an AAD construction method to other devices.

According to a first aspect of embodiments of the disclosure, a method for encrypting a data frame is provided. The method is applied to a first device, and includes:
determining a first wireless frame, in which the first wireless frame includes a first identification bit, and the first identification bit indicates that the first device supports constructing new AAD; and
sending the first wireless frame.

According to a second aspect of embodiments of the disclosure, an apparatus for encrypting a data frame is provided. The apparatus includes:
a determining module, configured to determine a first wireless frame, in which the first wireless frame includes a first identification bit, and the first identification bit indicates that a first device supports constructing new AAD; and
a communicating module, configured to send the first wireless frame.

According to a third aspect of embodiments of the disclosure, an electronic device is provided. The electronic device includes: a memory and a processor. The memory stores a computer program executable by the processor. When the processor executes the program, the method for encrypting the data frame according to any embodiment of the disclosure is implemented.

According to a fourth aspect of embodiments of the disclosure, a computer-readable storage medium is provided. The computer-readable storage medium stores a computer program, and when the computer program is executed by a processor, the method for encrypting the data frame according to any embodiment of the disclosure is implemented.

Additional aspects and advantages of the embodiments of disclosure will be given in part in the following descriptions, become apparent in part from the following descriptions, or be learned from the practice of the disclosure.

### BRIEF DESCRIPTION OF THE DRAWINGS

In order to clearly illustrate the technical solutions of the embodiments of the disclosure, a brief description of drawings used in the embodiments of the disclosure is given below. Obviously, the drawings in the following descriptions are only part of the embodiments of the disclosure, and for those skilled in the art, other drawings can be obtained according to these drawings without inventive work.
FIG. 1 illustrates an existing method for encrypting a data frame.
FIG. 2 is a schematic structural diagram of a communication system provided by an embodiment of the disclosure.
FIG. 3 is an interactive schematic diagram of a method for encrypting a data frame provided by an embodiment of the disclosure.
FIG. 4 is a flowchart of the method for encrypting the data frame provided by an embodiment of the disclosure.
FIG. 5 is a schematic structural diagram of an apparatus for encrypting a data frame provided by an embodiment of the disclosure.
FIG. 6 is a schematic structural diagram of an electronic device provided by an embodiment of the disclosure.

### DETAILED DESCRIPTION

In the embodiments of the disclosure, the term "and/or" describes a relation of associated objects and indicates three relations. For example, "A and/or B" indicates that A exists alone, A and B both exist, and B exists alone. The character "/" generally indicates that associated objects prior to and after the character "/" is in an "or" relation.

The term "a plurality of" in the embodiments of the disclosure refers to two or more, which is the similar for other quantifiers.

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following descriptions of the example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and the attached claims are also intended to include plural forms, unless the context clearly indicates other meanings. It should be understood that the term "and/or" as used herein refers to and includes any or all possible combinations of one or more associated listed items.

It is understandable that although the terms "first", "second" and "third" are used in the disclosure to describe various information, the information should not be limited to these terms. These terms are only used to distinguish the same type of information from each other. For example, without departing from the scope of the disclosure, the first information may be referred to as the second information, and similarly, the second information may be referred to as the first information. Depending on the context, the term "if" as used herein may be interpreted as "when", "while" or "in response to determining".

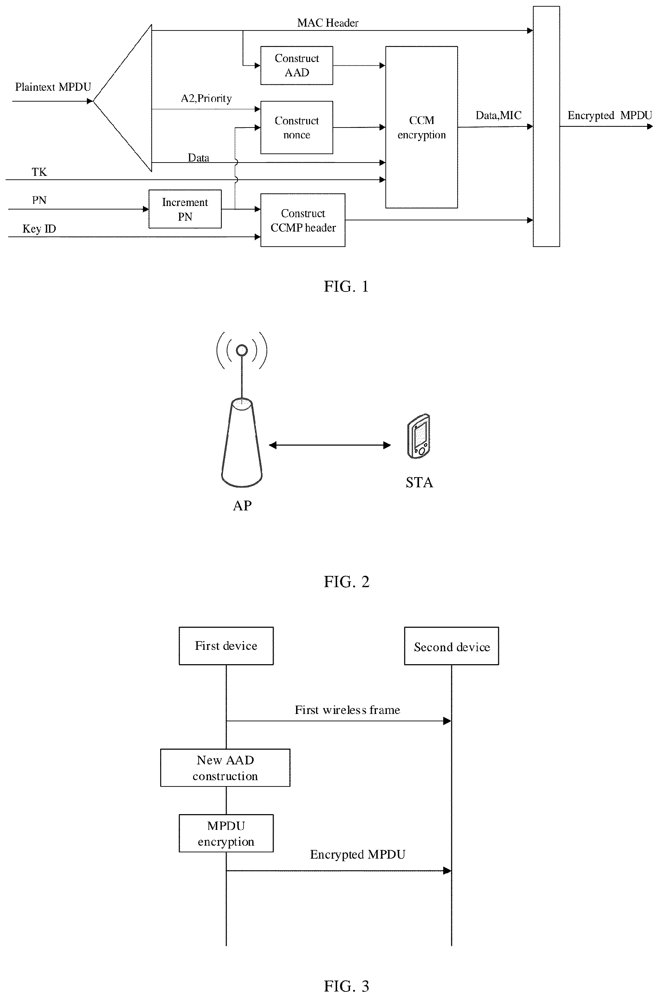

In existing WLAN technologies, the process of encrypting a data frame is shown in FIG. 1.

For each newly transmitted plaintext medium access control (MAC) protocol data unit (MPDU), when encrypting it, AAD is constructed according to a MAC header of the plaintext MPDU, and a nonce is constructed according to a packet number (PN), an Address2 (A2) of the plaintext MPDU, and a Priority subfield in a quality of service (QoS) Control (QC) field of the plaintext MPDU. Counter mode with cipher block chaining-message authentication code (CCM) encryption is performed on a temporary key (TK), data of the MPDU, the nonce, and the AAD to obtain encrypted data and messages integrity check (MIC). A count mode and a CCM protocol (CCMP) header are constructed according to the PN and a Key ID. An encrypted MPDU is obtained by assembling the MAC header, the CCMP header, the encrypted data and the MIC.

The PN is incremented, that is, each newly transmitted MPDU will generate a new PN. If it is a retransmitted MPDU, its old PN will be in use.

The existing AAD architecture is shown as follows:

| | | | | | | |
|---|---|---|---|---|---|---|
| FC | A1 | A2 | A3 | SC | A4 | QC |

| | | | | | | |
|---|---|---|---|---|---|---|
| where FC, A1, A2, A3, SC, A4, and QC represent the Frame Control field, Address1, Address2, Address3, a Sequence Control field, and a QC field in the MAC header of the plaintext MPDU, respectively. | | | | | | |

Moreover, the length of AAD are different when the QC and/or the A4 are present or absent, which are shown in the table below.

| QC field | A4 field | AAD length (octets) |
|---|---|---|
| Absent | Absent | 22 |
| Present | Absent | 24 |
| Absent | Present | 28 |
| Present | Present | 30 |

The structure of the MAC frame is as follows:

| | | | | | | | | | |
|---|---|---|---|---|---|---|---|---|---|
| Octets | 2 | 2 | 6 | 0 or 6 | 0 or 6 | 0 or 2 | 0 or 6 | 0 or 2 | 0 or 4 |
| | Frame Control | Duration /ID | Address 1 | Address 2 | Address 13 | Sequence Control | Address 4 | Qos Control | HT Control |

| | | |
|---|---|---|
| Octets | | |
| | Frame Body | FCS |

Other fields except the Frame Body and the FCS (frame check sequence) fields constitute the MAC header.

The format of the Frame Control field is as follows:

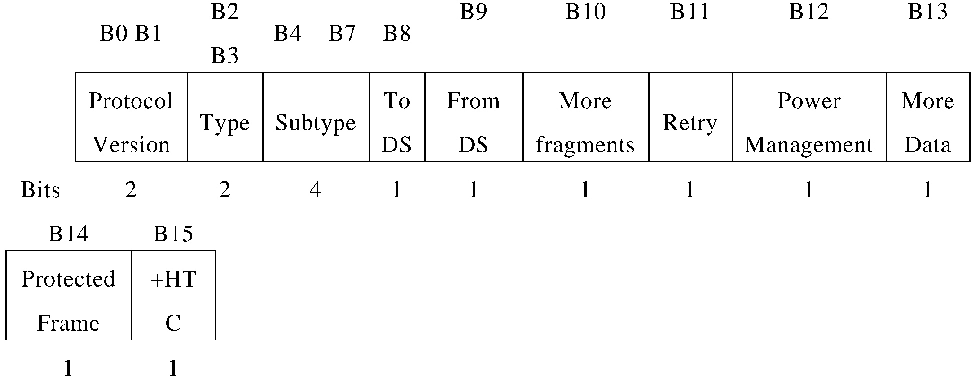

The Frame Control field includes the Protocol Version subfield, the Type subfield, the Subtype subfield, the To Distribution System (DS) subfield, the From DS subfield, the More Fragments subfield, the Retry subfield, the Power Management subfield, the More Data subfield, the Protected Frame subfield, and the High Throughput Control (+HTC) subfield.

When constructing the AAD, three least significant bits (LSB) of the Subtype subfield (bits 4, 5 and 6) in the FC field are masked out, and bit 7 in the FC field is not modified;
the Retry subfield (bit 11 in the FC field) is masked out;
the Power Management subfield (bit 12 the FC field) is masked out;
the More Data subfield (bit 13 in the FC field) is masked out;
the Protected Frame subfield (bit 14 in the FC field) is not modified;
the +HTC subfield is masked out in a case an MPDU frame contains the Qos Control field, otherwise, it is not modified; and
other subfields in the FC field are not modified.

When constructing the AAD, A1, A2, A3 and A4 in the MAC header are not modified.

A Sequence Number subfield in the SC field is masked out, and a Fragment Number subfield is not modified.

If the QC field includes a MSDU priority, a QC TID is used in the AAD construction. When in a non-DMG BSS, if SPP a-MSDU Capability subfields of a station (STA) and its peer are equal, an A-MSDU Present field is also used for the AAD construction. When in a DMG BSS, the A-MSDU Present field and an A-MSDU Type field are also used in the AAD construction.

According to the above description of AAD construction, a HT Control field in the MAC header does not participate in the AAD construction. However, the HT Control field may contain sensitive information, such as buffer status report (BSR). If tampered by an attacker, it may cause resource coordination problems and is not conducive to the efficient use of spectrum. On the basis, a new AAD construction method is needed to reduce the transmission risk of data frame.

The technical solutions in the embodiments of the disclosure will be clearly and completely described below in combination with the drawings in the embodiments of the disclosure. Obviously, the described embodiments are only part of the embodiments of the disclosure, not all of them. Based on the embodiments of the disclosure, all other embodiments obtained by those skilled in the art without inventive work shall fall within the scope of protection of the disclosure.

The method and apparatus are based on the same public concept. Since they solve problems based on similar principles, the implementations of the apparatus and the method can refer to each other, and the repeated parts will not be elaborated here.

FIG. 2 is a schematic structural diagram of a communication system provided by an embodiment of the disclosure. The system architecture includes: an access point (AP) and an STA. The AP may exchange data with the STA after establishing a connection with the STA.

The AP in the embodiments of the disclosure may be an independent device not attached to any AP multi-link device (MLD), or an AP attached to an AP MLD. The AP MLD may be regarded as the AP in the embodiments of the disclosure, which is not limited here.

The STA may be an independent device not attached to any Non-AP MLD, or an STA attached to a Non-AP MLD. The Non-AP MLD may be regarded as the STA in the embodiments of the disclosure, which is not limited here.

The AP or the STA (referred to as a first device in the embodiments of the disclosure) may determine and send a first wireless frame to its peer. The first wireless frame includes a first identification bit, which is used to indicate that the first device supports constructing new AAD.

The new AAD includes parameter information of a +HTC subfield in the FC field.

The first device may first construct a first AAD for encrypting a first MPDU frame, and construct an encrypted MPDU frame according to the first AAD, and then send the encrypted MPDU frame to a second device.

The method for encrypting the data frame provided by the embodiments of the disclosure is further described below with reference to FIG. 3.

For a first device, the first device may determine and send a first wireless frame to a second device. The first wireless frame includes a first identification bit, which is used to indicate that the first device supports constructing new AAD.

**If** the first device is an AP, the second device is an STA. If the first device is an STA, the second device is an AP.

When the first device needs to send a first MPDU frame, it may construct a new AAD corresponding to the first MPDU frame, and then constructs an encrypted MPDU frame based on the constructed new AAD and the first MPDU frame.

When constructing the new AAD, at least one of a HT Control field in a MAC header of the first MPDU frame, a Duration field in the MAC header, a Sequence Number subfield of a SC field in the MAC header, a More Fragments subfield in a FC field, a Retry subfield in the FC field, a Power Management subfield in the FC field, a More Data subfield in the FC field, and a +HTC subfield in the FC field participates in the construction of the new AAD.

After the first device completes the construction of the encrypted MPDU frame, the first device may send the encrypted MPDU frame to the second device.

The encrypted MPDU frame includes a first indication field (i.e., the Protocol Version subfield in the FC field in the MAC header), which is used not only to indicate that the encrypted MPDU frame is constructed based on the new AAD, but also to instruct the second device to adopt a corresponding decryption method to decrypt the encrypted MPDU frame.

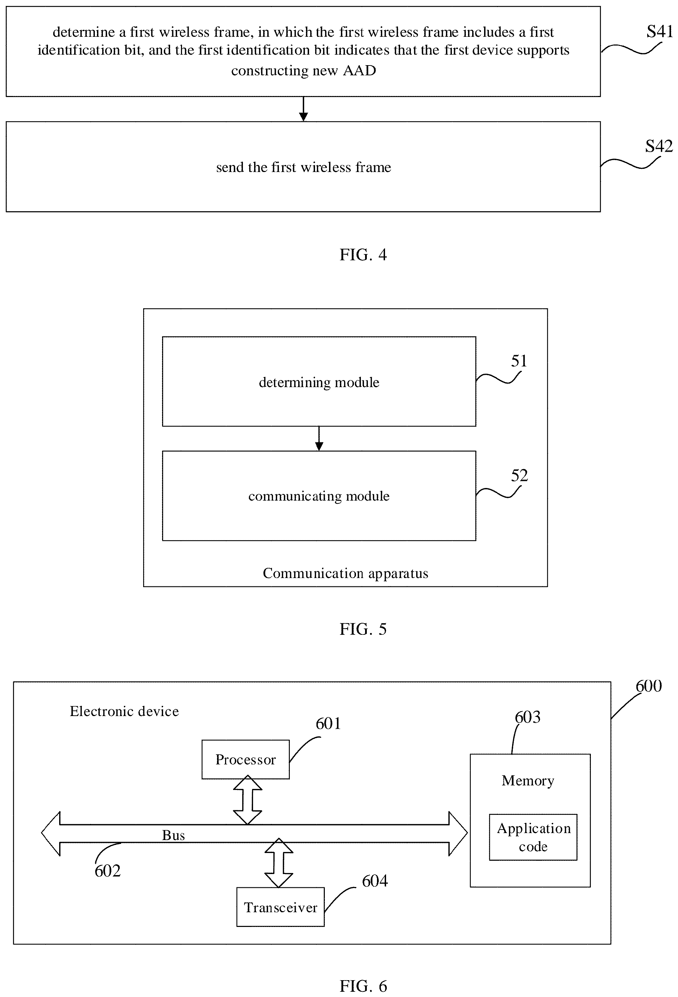

The embodiments of the disclosure provide a method for encrypting a data frame, which is applied to a first device. Details of the method can refer to FIG. 4, FIG. 4 is a flowchart of the method for encrypting the data frame provided by an embodiment of the disclosure.

**In** an embodiment of the disclosure, the method for encrypting the data frame applied to the first device in the embodiments of the disclosure includes the following steps.

**In** step S41, a first wireless frame is determined, in which the first wireless frame includes a first identification bit, and the first identification bit indicates that the first device supports constructing new AAD.

Compared with the AAD constructed by the existing technologies, the new AAD further includes parameter information of at least one information field that is masked out or not adopted by the existing technologies, e.g., parameter information of the More fragments subfield, the Retry field, the Power Management subfield, the More Data subfield and/or the +HTC subfield in the FC field, or parameter information of the HT Control field and/or the Duration field in the MAC header and other information fields.

**In** step S42, the first wireless frame is sent.

The first device in the embodiments of the disclosure may be an AP or an STA. If the first device is an AP, the first device sends the first wireless frame to an STA. If the first device is an STA, the first device sends the first wireless frame to an AP.

**In** the method for encrypting the data frame applied to the first device in the embodiments of the disclosure, the first wireless frame includes an Extended Robust Security Network (RSN) Capabilities field, and the Extended RSN Capabilities field includes the first identification bit.

The first wireless frame includes an RSN extension (RSNXE) element, which includes the Extended RSN Capabilities field, and the Extended RSN Capabilities field includes the first identification bit.

The format of the RSNEX element is shown below.

| | Element ID | Length | Extended RSN Capabilities |
|---|---|---|---|
| Octets | 1 | 1 | n |

The Extended RSN Capabilities field includes a plurality of bits. Bits 0-3 correspond to a Field Length field, which indicates a length of the Extended RSN Capabilities field. Bit 4 corresponds to a Protected TWT Operations Support field. When dot11ProtectedTWTOoperationslmlemente is true, the STA will set the value of bit 4 to 1, otherwise it will be set to 0. Bit 5 corresponds to a SAE Hash-To-Element field, which indicates that the hash-to-element method is supported for generating PWE instead of the loop-based method. Bit 6 is a reserved bit used by Wi-Fi alliance. Bit 7 corresponds to a Protected WUR Frame Support field. When dotllProtectedTWTOoperationslmlemented is true, the STA will set the value of bit 7 to 1, otherwise it will be set to 0. Bit 11 corresponds to a Protected Announce Support field. When dotllProtectedTWTOoperationslmlemented is true, a non-EDMG STA will set the value of bit 4 to 1, otherwise it will be set to 0. Bit 12 corresponds to a PBAC field, which is set by the STA to indicate that it can establish a protected blocking return protocol, otherwise it will be set to 0.

Based on the above description of the bits included in the Extended RSN Capabilities field, the first identification bit in the embodiments of the disclosure may be at least one bit other than the bits shown above. For example, the first identification bit may be bit 8 in the Extended RSN Capabilities field, or may be at least one other bit in the Extended RSN Capabilities field.

When the value of the first identification bit is a first value, it indicates that the first device supports the new AAD construction.

The first value may be 1, which is not limited here.

In a method for encrypting the data frame applied to the first device in an embodiment of the disclosure, the new AAD also includes parameter information of a Duration field in a MAC header.

That is, for any unencrypted MPDU, the new AAD also includes parameter information of a Duration field in a MAC header of the MPDU.

In an embodiment of the disclosure, when constructing a new AAD, in addition to parameter information of relevant information fields involved in related arts, the parameter information of the Duration field in the MAC header also participates in the construction of the new AAD.

In the method for encrypting the data frame applied to the first device in the embodiments of the disclosure, the new AAD further includes at least one of:
parameter information of a More Fragments subfield in a FC field;
parameter information of a Retry subfield in a FC field;
parameter information of a Power Management subfield in a FC field;
parameter information of a More Data subfield in a FC field; or
parameter information of a +HTC subfield in a FC field.

That is, for any unencrypted MPDU, the new AAD further includes at least one of the following items in the FC field in the MAC header of the MPDU:
parameter information of a More Fragments subfield;
parameter information of a Retry subfield;
parameter information of a Power Management subfield;
parameter information of a More Data subfield; or
parameter information of a +HTC subfield.

The More Fragments subfield indicates whether the unencrypted MPDU frame has more fragments. The Retry subfield indicates whether the unencrypted MPDU frame needs to be retransmitted. When the Power Management subfield is set to 1, it indicates that the STA will turn off its antenna and enter into a sleep state after sending the MPDU frame. If the MPDU frame is sent by the AP, the Power Management subfield is set to 0. The More Data subfield indicates that the current MPDU frame will have more data after the transmission is completed. The +HTC subfield indicates whether the MAC header of the current MPDU frame includes a HT Control field.

In an embodiment of the disclosure, when constructing the new AAD, in addition to parameter information of relevant information fields involved in related arts, the parameter information of at least one of the More Fragments subfield, the Retry subfield, the Power Management subfield, the More Data subfield, or the +HTC subfield also participates in the construction of the new AAD.

In a method for encrypting the data frame applied to the first device in an embodiment of the disclosure, the new AAD also includes parameter information of a Sequence Number subfield of a SC field in the MAC header.

In the existing AAD construction methods, the Sequence Number subfield of the SC field is masked out. For any unencrypted MPDU, its new AAD at least includes the parameter information of the Sequence Number subfield of the SC field in the MAC header of the MPDU.

In an embodiment of the disclosure, in addition to the parameter information of the relevant information fields involved in the related arts, the parameter information of the Sequence Number subfield of the SC field in the MAC header also participates in the construction of the new AAD.

In an embodiment of the disclosure, when the SC field includes a Fragment Number subfield, the new AAD may also include parameter information of the Fragment Number subfield, or may include the parameter information of the Fragment Number subfield and the Sequence Number subfield, which is not limited here.

The format of the SC field is shown below.

| | | |
|---|---|---|
| | B0 | B4 |
| | B3 | B15 |

| | Fragment Number | Sequence Number |
|---|---|---|
| Bits | 4 | 12 |

When the Fragment Number subfield is absent, only the parameter information of the Sequence Number subfield in the SC field participates in the construction of the new AAD.

In a method for encrypting the data frame applied to the first device in an embodiment of the disclosure, the new AAD also includes parameter information of a HT Control field in the MAC header.

In an embodiment of the disclosure, when constructing the new AAD, in addition to the parameter information of the relevant information fields involved in the related arts, all the parameter information of the HT Control field in the MAC header participate in the construction of the new AAD.

In an embodiment of the disclosure, when constructing the new AAD, in addition to the parameter information of the relevant information fields involved in the related arts, part of the parameter information of the HT Control field in the MAC header participate in the construction of the new AAD.

The format of the HT Control field is shown below.

| | | | | | |
|---|---|---|---|---|---|
| Variant | B0 | B1 | B2-B29 | B30 | B31 |
| HT | 0 | HT Control Middle | | AC Constraint | RDG/More PPDU |
| VHT | 1 | 0 | VHT Control Middle | AC Constraint | RDG/More PPDU |
| HE | 1 | 1 | A-Control | | |

In an embodiment of the disclosure, the HT Control field includes many Variants, such as HT variant, VHT variant and HE variant. B0 and B1 in the above table are jointly indicate the format of the HT Control field. The HT variant and the VHT variant include a HT Control Middle subfield, an AC Constraint field, a reverse direction grant (RDG)/More PPDU subfield, and other subfields. B2 indicates the RDG/More PPDU subfield.

On the basis, when constructing new AAD, in addition to the parameter information of the relevant information fields involved in the related arts, a parameter of a bit used to indicate a format of the HT Control field may not affect data security this time, so in the HT Control field in the MAC header, except the bit used to indicate the format of the HT Control field, parameter information of other bits also participate in the construction of the new AAD.

For example, if the HT Control field is an HT variant, when constructing new AAD, in addition to the parameter information of the relevant information fields involved in the related arts, the parameter information indicated by other bits except bit0 (B0) in the HT Control field also participate in the construction of the new AAD.

If the HT Control field is a VHT variant or a HE variant, when constructing new AAD, in addition to the parameter information of the relevant information fields involved in the related arts, the parameter information indicated by other bits except B0 and B1 in the HT Control field also participate in the construction of the new AAD.

In a case the HT Control field participates in the new AAD construction, sensitive information in the HT Control field can be prevented from being tampered by attackers, thus improving spectrum utilization. For example, as shown in the following table, if the HT Control field is the HE variant, the HT Control field may include an Aggregated Control (A-Control) field. The A-Control field includes a Control List subfield and a Padding subfield, and the Control List subfield includes a Control Identification (Control ID), Control Information and the like.

| | Control List | Padding |
|---|---|---|
| Bits | Variable | 0 or more |

If the value of the Control ID is 0, it indicates that the Control Information field includes Triggered response scheduling (TRS) information; if the value of the Control ID is 1, it indicates that the Control Information field includes Operating mode (OM) information; if the value of the Control ID is 2, it indicates that the Control Information field includes HE link adaptation (HLA) information; if the value of the Control ID is 3, it indicates that the Control Information field includes Buffer status report (BSR) information; if the value of the Control ID is 4, it indicates that the Control Information field includes Uplink power headroom (UPH) information; if the value of the Control ID is 5, it indicates that the Control Information field includes Bandwidth query report (TRS) information; if the value of the Control ID is 6, it indicates that the Control Information field includes Command and status (CAS) information; or if the value of the Control ID is 15, it indicates that the Control Information field includes Ones need expansion surely (ONES) information.

In a case the HT Control field participates in the construction of new AAD, the related information indicated by the Control Information in the HT Control field can be prevented from being tampered by attackers, thus improving the spectrum utilization.

In a method for encrypting the data frame applied to the first device provided by an embodiment of the disclosure, in the construction of new AAD, the length of the finally constructed new AAD is different depending on information fields participating in the construction of new AAD among the FC field, the SC field and the HT Control field. That is, the length of the final new AAD is specifically determined by a total length of information fields participating in the construction of new AAD.

In the method for encrypting the data frame applied to the first device provided by the embodiments of the disclosure, after sending the first wireless frame, the first device may construct new AAD for encrypting the first MPDU frame to be transmitted based on the MAC header of the first MPDU, so as to construct the encrypted MPDU frame according to the new AAD corresponding to the first MPDU frame and the first MPDU frame.

The process of constructing the encrypted MPDU frame according to the new AAD corresponding to the first MPDU frame and the first MPDU frame is shown in FIG. 1, which will not be repeated here.

In an embodiment of the disclosure, when the first device is an STA, the first wireless frame carrying the first identification bit is a beacon frame or a (re)association request frame. If the first device is an AP, the first wireless frame carrying the first identification bit is a beacon frame or a (re)association response frame.

In an embodiment of the disclosure, the first device may send a first wireless frame to indicate that it supports the construction of new AAD through the first identification bit included in it, and receives a second wireless frame sent by a second device at the same time, in which the second wireless frame indicates that the second device supports the construction of new AAD through a second identification bit. In this case, the first device sends the encrypted MPDU frame to the second device, and the second device receives the encrypted MPDU frame and parse the encrypted MPDU frame in a corresponding parsing mode under the condition of supporting the construction of new AAD.

In the method for encrypting the data frame applied to the first device provided by the embodiments of the disclosure, the MAC header of the encrypted MPDU frame includes a first indication subfield, and the first indication subfield indicates that the encrypted MPDU frame is constructed based on new AAD through first indication information.

When the first device indicates that the encrypted MPDU frame is constructed based on the new AAD through the first indication information, it may further instruct a device that receives the encrypted MPDU frame to decrypt and read the encrypted MPDU frame based on a corresponding decryption method.

In an embodiment of the disclosure, the MAC header of the encrypted MPDU includes a FC field, which includes a Protocol Version subfield. The first indication subfield is the Protocol Version field in the FC field.

In an embodiment of the disclosure, the first indication information may be 10 or other values, which is not limited here.

As an example, the first device sends the encrypted MPDU frame. If the value of the Protocol Version subfield in the encrypted MPDU frame is 10, it indicates that the AAD corresponding to the encrypted MPDU frame is constructed in a new way.

Based on the new AAD provided by the embodiments of the disclosure, compared with the related arts, parameter information of multiple information fields are introduced, such as at least one of the HT Control field in the MAC header, the Duration field in the MAC header, the sequence number subfield in the SC field in the MAC header, the more fragments subfield in the FC field, the retry subfield in the FC field, the power management subfield in the FC field, the more data subfield in the FC field, and the +HTC subfield in the FC field. Therefore, compared with the related arts, the data security of the data frame to be transmitted can be ensured more comprehensively, and the data transmission efficiency is improved.

As illustrated in FIG. 5, an embodiment of the disclosure provides an apparatus for encrypting a data frame. The apparatus includes:
a determining module 51, configured to determine a first wireless frame, in which the first wireless frame includes a first identification bit, and the first identification bit indicates that a first device supports constructing new AAD; and
a communicating module 52, configured to send the first wireless frame.

In an embodiment of the disclosure, the new AAD includes parameter information of a HT Control field in a MAC header.

In an embodiment of the disclosure, the first wireless frame includes an Extended RSN Capabilities field, and the Extended RSN Capabilities field includes the first identification bit.

In an embodiment of the disclosure, the new AAD further includes parameter information of a Duration field in a MAC header.

In an embodiment of the disclosure, the new AAD further includes parameter information of a Sequence Number subfield of a SC field in a MAC header.

In an embodiment of the disclosure, the new AAD further includes at least one of:
parameter information of a More Fragments subfield in a FC field;
parameter information of a Retry subfield in a FC field;
parameter information of a Power Management subfield in a FC field;
parameter information of a More Data subfield in a FC field; or
parameter information of a +HTC subfield in a FC field.

In an embodiment of the disclosure, if the first device is an STA, the first wireless frame is a beacon frame or a (re)association request frame. If the first device is an AP, the first wireless frame is a beacon frame or a (re)association response frame.

In an embodiment of the disclosure, the determining module 51 is further configured to:
construct the new AAD for encrypting a first MPDU frame, and construct an encrypted MPDU frame according to the first MPDU frame and the new AAD corresponding to the first MPDU frame.

The communicating module 52 is further configured to:
send the encrypted MPDU frame.

In an embodiment of the disclosure, a MAC header of the encrypted MPDU frame includes a first indication field, and the first indication field indicates that the encrypted MPDU frame is constructed based on the new AAD through first indication information.

In an embodiment of the disclosure, the first indication field is a Protocol Version subfield in a FC field.

An embodiment of the disclosure provides an electronic device. As illustrated in FIG. 6, the electronic device 600 shown in FIG. 6 includes: a processor 601 and a memory 603. The processor 601 is connected to the memory 603, for example, via a bus 602. In an embodiment of the disclosure, the electronic device 600 also includes a transceiver 604. It should be noted that there may be one or more transceivers 604 in practical applications, and the structure of the electronic device 600 does not constitute a limitation on the embodiments of the disclosure.

The memory 603 is used to store application codes for executing the embodiments of the disclosure, and the execution is controlled by the processor 601. When the electronic device 600 serves as a first device, the processor 601 is configured to execute the application codes stored in the memory 603 to implement the method for encrypting the data frame applied to the first AP provided by the embodiments of the disclosure.

The bus 602 may include a pathway to transfer information among the above components. The bus 602 may be a peripheral component interconnect (PCI) bus or an extended industry standard architecture (EISA) bus. The bus 602 can be categorized as an address bus, a data bus, a control bus, and the like. For ease of representation, the bus 602 is represented by only one thick line in FIG. 6, but it does not indicate that there is only one bus or one type of bus.

The memory 603 may be a read only memory (ROM) or other types of static storage devices for storing static information and instructions, a random access memory (RAM) or other types of dynamic storage devices for storing information and instructions, an electrically erasable programmable ROM (EEPROM), a compact disc-ROM (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store expected program codes in the form of instructions or data structures and can be accessed by a computer, which is not limited herein.

An embodiment of the disclosure provides a computer-readable storage medium having a computer program stored thereon. When the computer program is executed by a computer, the computer is caused to execute the corresponding contents in the above method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowcharts of the accompanying drawings may include several sub-steps or stages. These sub-steps or stages are not necessarily executed simultaneously, but may be executed at different moments. These sub-steps or stages are not necessarily executed in sequence, and may be executed in turn or alternately with other steps or at least a portion of sub-steps or stages of other steps.

The computer-readable storage medium described above in the disclosure may be a computer-readable signal medium, a computer-readable storage medium or a combination of the two. The computer-readable storage medium may include, but is not limited to, an electrical, magnetic, optical, electromagnetic, infrared, or semiconductor system, apparatus or device, or any combination thereof. More specific examples of the computer-readable storage medium include, but are not limited to, electrical connections having one or more wires, portable computer disks, hard disks, RAMs, ROMs, erasable programmable ROMs (EPROMs or flash memories), optical fibers, portable CD-ROMs, optical storage devices, magnetic memory devices, or any suitable combination thereof. In the disclosure, the computer-readable storage medium may be any tangible medium containing or storing programs that are used by or in combination with an instruction execution system, apparatus or device. In the disclosure, the computer-readable signal medium may include a data signal propagated in a baseband or as part of a carrier that carries computer-readable program codes. The propagated data signal may take a variety of forms, including, but is not limited to, an electromagnetic signal, an optical signal, or any suitable combination thereof. The computer-readable signal medium may be any computer-readable storage medium other than the computer-readable storage medium described above. The computer-readable signal medium may send, propagate, or transmit a program that can be used by or in combination with an instruction execution system, apparatus, or device. The program code stored on the computer-readable storage medium may be transmitted using any suitable medium, including, but is not limited to: wire, fiber optic cable, radio frequency (RF), or any suitable combination thereof.

The above computer-readable storage medium may be included in the above first device or exist independently rather than being assembled into the first device.

The computer-readable storage medium carries one or more programs. When the one or more programs are executed by the first device, the first device is caused to implement the method for encrypting the data frame.

According to an aspect of the disclosure, a computer program product or computer program is provided. The computer program product or computer program includes computer instructions stored in a computer-readable storage medium. A processor of a computer device reads the computer instructions from the computer-readable storage medium, and executes the computer instructions to cause the computer device to implement the method for encrypting the data frame provided in the above optional implementations.

Computer program codes for performing operations of the disclosure are written in one or more programming languages or combinations thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on the remote computer or a server. In the case involving the remote computer, the remote computer is connected to the user computer via any type of network, including a local area network (LAN) or a wide area network (WAN), or it may be connected to an external computer (e.g., via the Internet through an Internet service provider).

The flowcharts and block diagrams in the accompanying drawings illustrate possible architectures, functions and operations that can be implemented by the systems, methods and computer program products according to the embodiments of the disclosure. At this point, each block in the flowcharts or block diagrams may represent a module, a program segment, or a portion of a code, which includes one or more executable instructions for implementing a specified logical function. It should be noted that in some implementations as replacements, the functions labeled in the blocks may be implemented in a different order than the order labeled in the accompanying drawings. For example, two consecutively represented blocks may actually be executed substantially in parallel, or they may sometimes be executed in a reverse order, depending on the function involved. It should also be noted that each of the blocks in the block diagrams and/or flowcharts, and any combination of blocks in the block diagrams and/or flowcharts, may be implemented with a specialized hardware-based system that performs the specified function or operation, or may be implemented with a combination of dedicated hardware and computer instructions.

The modules described in the embodiments of the disclosure may be realized through software or hardware. The name of a module does not constitute a limitation on the module itself in a certain case. For example, module A may also be described as "module A for performing an operation B".

The above descriptions involve only preferred embodiments of the disclosure and an explanation of technical principles utilized. It should be understood by those skilled in the art that the scope of disclosure involved in the disclosure is not limited to the technical solution consisting of a particular combination of the above technical features, but also covers other technical solutions consisting of any combination of the above technical features or their equivalent features without departing from the above disclosed concept, such as a technical solution obtained by replacing the above features with (but not limited to) technical features with similar functions disclosed in the disclosure.

## Claims

1. A method for encrypting a data frame, applied to a first device, comprising:
determining a first wireless frame, wherein the first wireless frame comprises a first identification bit, and the first identification bit indicates that the first device supports constructing new additional authentication data (AAD); and
sending the first wireless frame.

2. The method of claim 1, wherein the new AAD comprises parameter information of a high-throughput control field in a medium access control (MAC) header.

3. The method of claim 1, wherein the first wireless frame comprises an extended robust security network capabilities field, and the extended robust security network capabilities field comprises the first identification bit.

4. The method of claim 1, wherein the new AAD further comprises parameter information of a duration field in a MAC header.

5. The method of claim 1, wherein the new AAD further comprises parameter information of a sequence number subfield of a sequence control field in a MAC header.

6. The method of claim 1, wherein the new AAD further comprises at least one of:
parameter information of a more fragments subfield in a frame control field;
parameter information of a retry subfield in a frame control field;
parameter information of a power management subfield in a frame control field;
parameter information of a more data subfield in a frame control field; or
parameter information of a high-throughput control indication subfield in a frame control field.

7. The method of claim 1, wherein in a case that the first device is a station (STA), the first wireless frame is a beacon frame or a reassociation request frame; and in a case that the first device is an access point (AP), the first wireless frame is a beacon frame or a reassociation response frame.

8. The method of claim 1, further comprising:
constructing a new AAD for encrypting a first MAC protocol data unit (MPDU) frame, and constructing an encrypted MPDU frame according to the first MPDU frame and the new AAD corresponding to the first MPDU frame; and
sending the encrypted MPDU frame.

9. The method of claim 8, wherein a MAC header of the encrypted MPDU frame comprises a first indication field, and the first indication field indicates through first indication information that the encrypted MPDU frame is constructed based on the new AAD.

10. The method of claim 9, wherein the first indication field is a protocol version subfield in a frame control field.

11. An apparatus for encrypting a data frame, comprising:
a determining module, configured to determine a first wireless frame, wherein the first wireless frame comprises a first identification bit, and the first identification bit indicates that a first device supports constructing new additional authentication data (AAD); and
a communicating module, configured to send the first wireless frame.

12. An electronic device, comprising a memory, a processor and a computer program stored in the memory and executable on the processor, wherein the processor, when executing the computer program, implements the method according to any one of claims 1-10.

13. A computer-readable storage medium, wherein the medium stores a computer program, and when the computer program is executed by a processor, the method according to any one of claims 1-10 is implemented.
